**Europäisches Patentamt**

**European Patent Office**

**Office européen des brevets**

(19)

(11) Numéro de publication: **0 139 571**
**B1**

(12) # FASCICULE DE BREVET EUROPEEN

(45) Date de publication du fascicule du brevet:
**22.04.87**

(51) Int. Cl.⁴: **A 43 B 5/08, B 60 C 11/08**

(21) Numéro de dépôt: **84401908.3**

(22) Date de dépôt: **25.09.84**

(54) **Surface support en élastomère avec réseau de sculptures notamment semelle de chaussure dite "marine".**

(30) Priorité: **19.10.83 FR 8316639**

(43) Date de publication de la demande:
**02.05.85 Bulletin 85/18**

(45) Mention de la délivrance du brevet:
**22.04.87 Bulletin 87/17**

(84) Etats contractants désignés:
**AT BE CH DE GB IT LI LU NL SE**

(56) Documents cités:
**FR - A - 1 365 430**
**FR - A - 2 148 347**
**FR - A - 2 434 587**
**US - A - 4 378 641**

(73) Titulaire: **TECHNISYNTHESE Société à Responsabilité Limitée, F-49110 Saint Pierre Montlimart Maine et Loire (FR)**

(72) Inventeur: **Vermonet, Christian, Basse-Tremblaye Route de Mortagne, F-49300 Cholet (FR)**

(74) Mandataire: **Lemonnier, André, Cabinet LEMONNIER 4, Boulevard Saint-Denis, F-75010 Paris (FR)**

## Description

La présente invention concerne une surface support en un élastomère tel que le caoutchouc, le chlorure de polyvinyle et matières analogues qui est munie d'un réseau de sculptures destinées à faciliter l'évacuation de l'eau et à éviter la formation d'un film d'eau entre la surface support et la surface d'appui. Elle a été conçue plus spécialement comme dessin pour une semelle de chaussure ou de botte utilisée à bord des batéaux mais elle est susceptible d'autres utilisations dans les articles chaussants et les pneumatiques de véhicules notamment.

Il est de pratique courante dans le domaine des pneumatiques et des semelles de chaussures de munir la surface d'appui de réseaux de canaux délimitant entre eux des nervures afin d'améliorer l'évacuation de l'eau se trouvant sur la surface du sol dans la zone de pression du pneumatique ou de la chaussure et d'améliorer l'adhérence en évitant l'effet de film d'eau. Il s'agit toutefois de réseaux de canaux parallèles et les nervures ne sont pas différenciées pour que certaines provoquent la circulation de l'eau à l'intérieur des canaux délimités par les autres nervures. En fait l'eau de la surface de circulation est évacuée par accroissement local de la pression d'appui dans la zone d'appui mais l'eau peut stagner dans les canaux entre les nervures et créer un phénomène de lubrification entretenue avec la surface mouillée avec laquelle la surface d'appui vient en contact.

FR-A-2 434 587 décrit une semelle de chaussures comportant sur sa surface des réseaux de nervures parallèles destinées à contrôler le glissement entre la chaussure et le sol pour autoriser un glissement de valeur définie. Les nervures parallèles entre elles sont continues et présentent alternativement des zones larges à arêtes arrondies et des zones étroites. Les canaux réalisés entre les nervures ont une largeur sensiblement constante et il n'existe pas de languettes étroites de longueur limitée disposées axialement dans de élargissements des canaux.

La surface support en élastomère avec réseau de sculptures objet de l'invention est munie de manière connue d'un réseau transversal de canaux étroits laissant entre eux des nervures en relief dont les arêtes libres forment la surface d'appui et elle est caractérisée en ce que le réseau de canaux présente des élargissements périodiques de chaque canal, une languette de largeur inférieure à la largeur des parois délimitant le canal et de hauteur égale à la profondeur du canal, étant prévue axialement dans chaque élargissement.

Le mécanisme présumé de la disposition conforme à l'invention est que la déformation de la languette lors de la mise en appui chasse l'eau emprisonnée entre la languette et la paroi de l'élargissement dans le canal en provoquant une circulation d'évacuation de l'eau, ce qui évite que de l'eau stagne dans les canaux de la surface support et forme sous cette surface un film continu susceptible de glisser sur le film d'eau recouvrant la surface de circulation. On ne peut en effet envisager d'évacuer l'eau de la surface d'appui avant que la surface support du pneumatique et de la semelle vienne en appui sur ladite surface et la seule possibilité est d'évacuer l'eau, dans toute la mesure du possible, de la surface support.

Selon une autre caractéristique de l'invention les élargissement périodiques dans deux canaux transversaux succesifs sont intercalés, les élargissements et les languettes étant en quinconce.

Selon une autre caractéristique, des canaux de plus grande largeur recoupent les canaux du réseau et forment collecteurs.

Selon un mode de réalisation les canaux ont une largeur d'environ 0,5 mm et une profondeur de 2 mm, les élargissement ont une largeur d'environ 1,5 mm et une longueur de 12 mm, les parois délimitant les canaux ont une largeur de 1 à 1,5 mm et les languettes une largeur de 0,5 mm et une longueur de 11 mm.

On a représenté à titre d'exemple sur le dessin ci-joint une petite partie d'une surface support conforme à l'invention. Dans ce dessin:

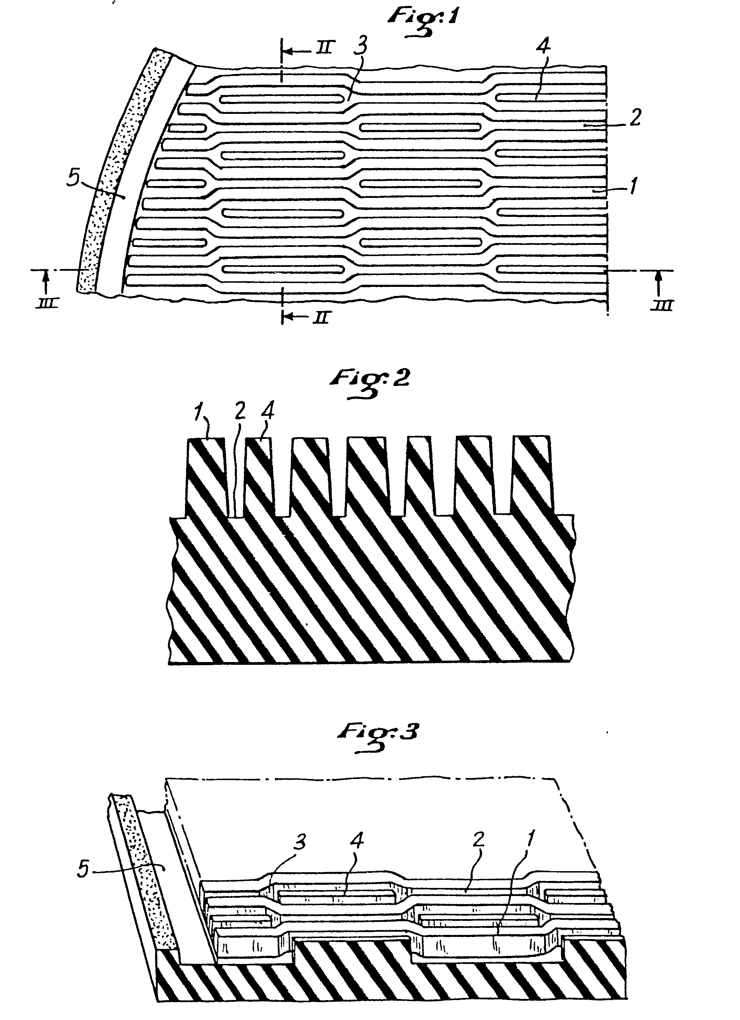

la figure 1 est une vue en plan de la surface;

la figure 2 est une vue en coupe par II-II de figure 1 et

la figure 3 en est une vue en coupe et en perspective par III-III de figure 1.

Dans les dessins, la référence 1 désigne la paroi séparant deux canaux, 2 une section étroite d'un canal, 3 une section élargie d'un canal et 4 une languette. Ces éléments ont, dans le cas d'une semelle pour chaussure marine, les dimensions indiquées ci-dessus pour le mode de réalisation préférentiel. Ces dimensions peuvent être plus importantes dans le cas de pneumatiques.

Dans le cas d'une semelle la périphérie de la surface prenant appui sur le sol est délimitée par un canal 5 de grande section qui forme collecteur.

## Revendications

1. Une surface support en élastomère avec réseau de sculptures constitué de manière connue par un réseau transversal de canaux étroits laissant entre eux des nervures en relief dont les arêtes libres forment la surface d'appui, caractérisée en ce que le réseau de canaux (2) présente des élargissements périodiques (3) de chaque canal, une languette (4), de largeur inférieure à la largeur des parois délimitant le canal et de hauteur égale à la profondeur du canal, étant prévue axialement dans chaque élargissement (3).

2. Une surface support en élastomère selon la revendication 1, caractérisée en ce que les élargissements périodiques (3) dans deux canaux transversaux (2) successifs sont intercalés, les élargissements (3) et les languettes (4) étant en quinconce.

3. Une surface support en élastomère selon l'une quelconque des revendications 1 et 2, caractérisée en ce que des canaux (5) de plus grande largeur recoupent les canaux du réseau et forment collecteurs.

4. Une semelle de chaussure, caractérisée en ce qu'elle comporte une surface de marche constituée par une surface support selon l'une quelconque des revendications 1 à 3.

5. Une semelle selon la revendication 4, caractérisée en ce que les canaux (2) ont une largeur d'environ 0,5 mm et une profondeur de 2 mm, les élargissements (3) ont une largeur d'environ 1,5 mm et une longueur de 12 mm, les parois (1) délimitant les canaux ont une largeur de 1 à 1,5 mm et les languettes (4) une largeur de 0,5 mm et une longueur de 11 mm.

## Patentansprüche

1. Elastomere Oberflächenauflage mit Profilnetz, das in bekannter Art aus einem Quernetz enger Kanäle mit dazwischenliegenden reliefförmigen Rippen besteht, deren freie Kämme die Auflagefläche bilden, dadurch gekennzeichnet, dass das Kanalnetz (2) in jedem Kanal periodisch auftretende Verbreiterungen (3) aufweist, in denen jeweils eine Lasche (4) mittig angeordnet ist, die eine Breite aufweist, die geringer ist als die Breite der Wände, die den Kanal begrenzen, und die eine Höhe aufweist, die gleich der Kanaltiefe ist.

2. Elastomere Oberflächenauflage nach Anspruch 1, dadurch gekennzeichnet, dass die periodischen Verbreiterungen (3) zweier aufeinanderfolgender Querkanäle (2) aneinandergefügt sind, wobei die Verbreiterungen (3) und die Laschen (4) schachbrettförmig angeordnet sind.

3. Elastomere Oberflächenauflage nach einem der Ansprüche 1 und 2, dadurch gekennzeichnet, dass Kanäle (5) vn grösserer Breite das Kanalnetz schneiden und Sammelräume bilden.

4. Schuhsohle, dadurch gekennzeichnet, dass sie eine Lauffläche aufweist, die von einer Oberflächenauflage nach einem der Ansprüche 1 bis 3 gebildet ist.

5. Schuhsohle nach Anspruch 4, dadurch gekennzeichnet, dass die Kanäle (2) eine Breite von etwa 0,5 mm und eine Tiefe von 2 mm, die Verbreiterungen (3) eine Breite von etwa 1,5 mm und eine Länge von 12 mm, die Wände (1), die die Kanäle begrenzen, eine Breite von 1 bis 1,5 mm und die Laschen (4) eine Breite von 0,5 mm und eine Länge von 11 mm aufweisen.

## Claims

1. An elastomeric support surface with a network of sculptures formed in known manner by a transverse network of narrow channels leaving therebetween protruding ribs the free edges of which form the bearing surface, wherein the network of channels (2) is formed with periodical widened portions (3) of each channel, a tong (4), having a width less than the width of the walls defining the channel and a height equal to the depth of the channel, being provided axially in each widened portion (3).

2. An elastomeric support surface according to claim 1, wherein the periodical widened portions (3) in two successive transverse channels (2) are internested, the widened portions and the tongs being staggered.

3. An elastomeric support surface according to claim 1 and 2, wherein channels (5) of larger width cross the channels of the network and form collectors.

4. A shoe sole, characterized in that it comprises a treading surface formed by support surface according to any of claims 1 to 3.

5. A shoe sole according to claim 4, wherein the channels (2) have a width of about 0.5 mm and a depth 2 mm, the widened portions (3) have a width of about 1.5 mm and a length of 12 mm, the walls (1) defining the channels have a width from 1 to 1.5 mm and the tongs (4) a width of 0.5 mm and a length of 11 mm.

*Fig:1*

*Fig:2*

*Fig:3*